(19) Europäisches Patentamt
European Patent Office
Office européen des brevets

(11) Veröffentlichungsnummer: **0 175 648 B1**

# (12) EUROPÄISCHE PATENTSCHRIFT

(45) Veröffentlichungstag der Patentschrift: **22.05.91**

(51) Int. Cl.5: **C08G 73/12**, C07D 207/448, C07D 209/76

(21) Anmeldenummer: **85810411.0**

(22) Anmeldetag: **09.09.85**

Die Akte enthält technische Angaben, die nach dem Eingang der Anmeldung eingereicht wurden und die nicht in dieser Patentschrift enthalten sind.

## (54) Substituierte Bicyclo[2.2.1]hept-5-en-2,3-dicarbonsäureimide und Polymaleinimide enthaltende heisshärtbare Stoffgemische und deren Verwendung.

(30) Priorität: **14.09.84 CH 4389/84**

(43) Veröffentlichungstag der Anmeldung:
**26.03.86 Patentblatt 86/13**

(45) Bekanntmachung des Hinweises auf die Patenterteilung:
**22.05.91 Patentblatt 91/21**

(84) Benannte Vertragsstaaten:
**BE CH DE FR GB IT LI NL**

(56) Entgegenhaltungen:
**EP-A- 0 014 816**
**EP-A- 0 105 024**
**EP-A- 0 155 435**
**FR-A- 2 205 550**

(73) Patentinhaber: **CIBA-GEIGY AG**
**Klybeckstrasse 141**
**CH-4002 Basel(CH)**

(72) Erfinder: **Renner, Alfred, Dr.**
**Marcoup 2**
**CH-3280 Muntelier(CH)**
Erfinder: **Eldin, Sameer H., Dr.**
**Route de Schiffenen 10**
**C-1700 Fribourg(CH)**

EP 0 175 648 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft substituierte Bicyclo[2.2.1]hept-5-en-2,3-dicarbonsäureimide und Polymaleinimide enthaltende heisshärtbare Stoffgemische und deren Verwendung.

Die EP-A-105024 beschreibt allyl- oder methallylsubstituierte Bicyclo[2.2.1.]hept-5-en-2,3-dicarbonsäureimide und deren Verwendung zur Herstellung von Polymeren durch Erhitzen der Imide auf Temperaturen zwischen 180 und 300° C.

Es ist auch bekannt, dass sich Polymaleinimide mit oder ohne Zusatz von Vernetzungsmitteln, wie Diaminen oder Diolen, durch Erhitzen in vernetzte Produkte überführen lassen [vgl. z.B. US-PS 3.562.223, 3.658.764, 3.380.964 und 4.038.251].

Gegenstand der Erfindung sind neue heisshärtbare Stoffgemische, enthaltend

a) 10-90 Gew.% mindestens einer Verbindung der Formel I

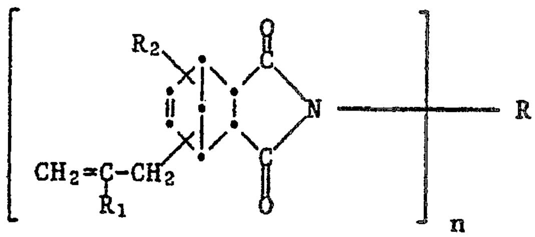

(I) ,

b) 90-10 Gew.% mindestens einer Verbindung der Formel II

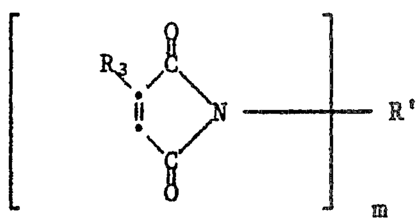

(II)

und, bezogen auf die Summe von a) + b),

c) 0-30 Gew.% mindestens einer zur Reaktion mit der Komponente b) befähigten Verbindung, wobei n 1 oder 2 und m 2 oder 3 bedeuten,

R, falls n 1 bedeutet, ein Wasserstoffatom, Alkyl mit 1-12 C-Atomen, Alkenyl mit 3-6 C-Atomen, Cycloalkyl mit 5-8 C-Atomen, Aryl mit 6-10 C-Atomen oder Benzyl, oder, falls n 2 bedeutet, $-C_pH_{2p}-$ mit p = 2-20, besonders $-(CH_2)_p$ mit p = 2-12, Arylen mit 6-10 C-Atomen oder eine Gruppe der Formel III

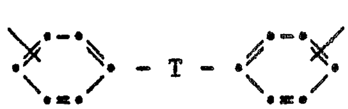

(III)

mit T = Methylen, Isopropyliden, CO, O, S oder $SO_2$, R' einen m-wertigen organischen Rest mit 2-30 C-Atomen und $R_1$, $R_2$ und $R_3$ unabhängig voneinander ein Wasserstoffatom oder eine Methylgruppe bedeuten.

$R_1$ und $R_2$ bedeuten vorzugsweise je ein Wasserstoffatom.

R kann eine gerad- oder verzweigtkettige Alkylgruppe mit 1-12 C-Atomen bedeuten, wie Methyl, Aethyl, Isopropyl, n-Butyl, Isopentyl, n-Hexyl, 2-Aethyl-hexyl, n-Decyl und n-Dodecyl, vorzugsweise Alkyl mit 1-8 C-Atomen. R in der Bedeutung einer Alkenylgruppe mit 3-6 C-Atomen kann ebenfalls geradkettig oder verzweigt sein, wie Allyl, Methallyl, 2-Butenyl und 3-Hexenyl, vorzugsweise Allyl.

Wenn R eine Cycloalkylgruppe bedeutet, kann es sich um eine Cyclopentyl-, Cyclohexyl-, Cycloheptyl- oder Cyclooctylgruppe handeln, vorzugsweise um Cyclohexyl.

R in der Bedeutung einer Arylgruppe kann unsubstituiertes Phenyl oder eine durch eine oder zwei Methylgruppen substituierte Phenylgruppe sein, wie Tolyl oder Xylyl, oder auch Naphthyl. Bevorzugt ist die Phenylgruppe. Stellt R eine Gruppe $-C_pH_{2p}-$ dar, so kann es sich um geradkettige oder verzweigte Reste handeln, wie Aethylen, Propylen, Trimethylen, Tetramethylen, Hexamethylen, Octamethylen und Dodecamethylen. Vorzugsweise bedeutet R eine Gruppe $-(CH_2)_p$ - mit m = 2 bis 12. Bedeutet R eine Gruppe der Formel III, so ist diese vorzugsweise in 4,4'-Stellung an die N-Atome gebunden.

R kann in der Bedeutung einer Arylengruppe mit 6-10 C-Atomen z.B. eine m-Phenylen-, p-Phenylen-, 1,3-Naphthylen-, 1,4-Naphthylen-, 1,5-Naphthylen- oder 2,6-Naphthylengruppe bedeuten.

Wenn R eine Gruppe der Formel III bedeutet, steht T vorzugsweise für die Methylengruppe, O oder $SO_2$.

Bevorzugte Verbindungen der Formel I sind solche, worin $R_1$ und $R_2$ je ein Wasserstoffatom bedeuten und R, falls n = 1 ist, für Wasserstoff, Alkyl mit 1-8 C-Atomen, Allyl, Cyclohexyl, Phenyl oder Benzyl steht, oder, falls n = 2 ist, für $-(CH_2)_p$ - mit p = 2-12, m- oder p-Phenylen oder für eine Gruppe der Formel III steht, worin T die Methylengruppe, O oder $SO_2$ bedeutet.

Besonders bevorzugt sind Verbindungen der Formel I, worin $R_1$ und $R_2$ ein Wasserstoffatom und R, falls n = 1 ist, Allyl, oder falls n = 2 ist, $-(CH_2)_6-$ oder

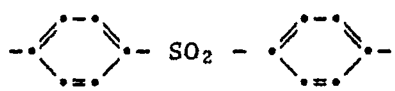

und insbesondere

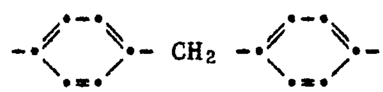

bedeuten.

Ganz besonders bevorzugt enthalten die erfindungsgemässen Stoffgemische als Komponente(n) a) Allyl-bicyclo[2.2.1]hept-5-en-2,3-dicarbonsäure-N-allylimid, Bis[4-(allyl-bicyclo[2.2.1]hept-5-en-2,3-dicarbonsäureimidophenyl)]methan oder N,N'-Hexamethylen-bis-(allyl-bicyclo-2.2.1]hept-5-en-2,3-dicarbonsäureimid) oder ein Gemisch dieser Verbindungen.

Beispiele für spezifische Verbindungen der Formel I sind:
Allyl-bicyclo[2.2.1]hept-5-en-2,3-dicarbonsäure-N-methylimid,
Allyl-bicyclo[2.2.1]hept-5-en-2,3-dicarbonsäure-N-allylimid,
Allyl-bicyclo[2.2.1]hept-5-en-2,3-dicarbonsäure-N-(2-äthylhexyl)imid,
Allyl-bicyclo[2.2.1]hept-5-en-2,3-dicarbonsäure-N-cyclohexylimid,
Allyl-bicyclo[2.2.1]hept-5-en-2,3-dicarbonsäure-N-phenylimid,
Allyl-bicyclo[2.2.1]hept-5-en-2,3-dicarbonsäure-N-benzylimid,
N,N'-Aethylen-bis-(allyl-bicyclo[2.2.1]hept-5-en-2,3-dicarbonsäureimid),
N,N'-Hexamethylen-bis-(allyl-bicyclo[2.2.1]hept-5-en-2,3-dicarbonsäureimid),
N,N'-Dodecamethylen-bis-(allyl-bicyclo[2.2.1]hept-5-en-2,3-dicarbonsäureimid),
Bis-[4-(allyl-bicyclo[2.2.1]hept-5-en-2,3-dicarbonsäureimidophenyl)]methan,
Bis[4-(methallyl-bicyclo[2.2.1]hept-5-en-2,3-dicarbonsäureimidophenyl)]methan,
N,N'-p-Phenylen-bis(allyl-bicyclo[2.2.1]hept-5-en-2,3-dicarbonsäureimid),
Bis [4-(allyl-bicyclo[2.2.1]hept-5-en-2,3-dicarbonsäureimidophenyl)]äther,
Bis[4-(allyl-bicyclo[2.2.1]hept-5-en-2,3-dicarbonsäureimidophenyl)]sulfon,
Allyl-methyl-bicyclo[2.2.1]hept-5-en-2,3-dicarbonsäure-N-allylimid,
Allyl-methyl-bicyclo[2.2.1]hept-5-en-2,3-dicarbonsäure-N-(2-äthylhexyl)imid,
Allyl-methyl-bicyclo[2.2.1]hept-5-en-2,3-dicarbonsäure-N-phenylimid,
N,NN'-Hexamethylen-bis-(allyl-methyl-bicyclo[2.2.1]hept-5-en-2,3-dicarbonsäureimid),
Bis[4-(allyl-methyl-bicyclo[2.2.1]hept-5-en-2,3-dicarbonsäureimidophenyl)]methan,Bis[4-(methallyl-methyl-bicyclo[2.2.1]hept-5-en-2,3-dicarbonsäureimidophenyl)]sulfon.

Die Imide der Formel I können auf an sich bekannte Weise, z.B. analog dem in der EP-A-105 024

beschriebenen Verfahren durch Umsetzen eines Anhydrids der Formel IV

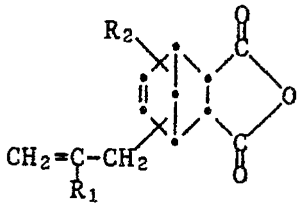

(IV)

mit einer Verbindung der Formel V

$$(H_2N)_{n}R \qquad (V),$$

worin R, $R_1$, $R_2$ und n die unter Formel I angegebene Bedeutung haben, bei erhöhter Temperatur und unter Abdestillieren des bei der Reaktion entstehenden Wassers hergestellt werden. Sofern es sich bei den Verbindungen der Formel V um Ammoniak oder niedrigsiedende Monoamine handelt, ist ein Ueberschuss dieser Reaktanden zu empfehlen. Diamine sind vorteilhaft in stöchiometrischem Verhältnis einzusetzen. Die Umsetzung kann ohne Lösungsmittel oder in Gegenwart eines inerten Lösungsmittels, das für die azeotrope Entfernung des Wassers verwendbar ist (Schleppmittel) erfolgen. Die Temperatur der Umsetzung kann zwischen 100 und 250 °C liegen. Bevorzugt werden die Imide der Formel I in der Schmelze bei einem Druck von höchstens 4500 Pa bei Temperaturen zwischen 130 und 220 °C, insbesondere 180 und 220 °C, hergestellt.

Als organische Reste R' kommen bei m = 2 z.B. in Betracht: $-C_pH_{2p}-$ mit p = 2-20, besonders $-(CH_2)_p-$ mit p = 2-12, $-CH_2CH_2SCH_2CH_2-$, Arylen mit 6-10 C-Atomen, Xylylen, Cyclopentylen, Cyclohexylen, 1,4-Bis(methylen)cyclohexylen, der Rest des Bicyclohexylmethans oder Reste der Formeln VI oder VII

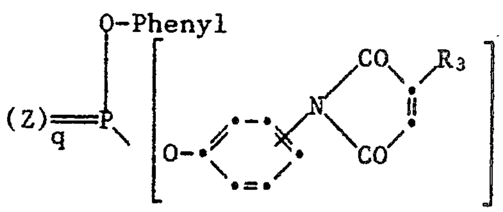

(VI)

oder

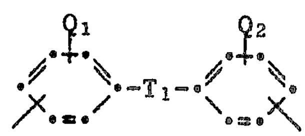

(VII)

Stellt m die Zahl 3 dar, so bedeutet R' z.B. einen Rest der Formel VIII

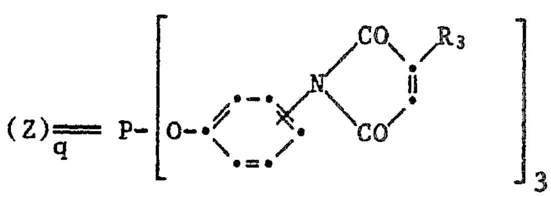

(VIII).

In den obigen Formeln VI bis VIII bedeutet $T_1$ Methylen, Isopropyliden, CO, O, S, $SO_2$, $-P=O(Q_3)$, $-NQ_3-$ ($Q_3$ = $C_1$-$C_4$-Alkyl), -N=N-, -CONH-, -COO-, $-NQ_3-CO-X-CO-NQ_3-$, -O-CO-X-CO-O-,

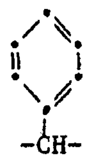 oder 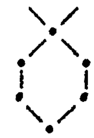 ,

q ist O oder 1,
Z stellt O oder S dar,
$Q_1$ und $Q_2$ bedeuten unabhängig voneinander ein Halogenatom, besonders Chlor oder Brom, Methyl oder Aethyl und insbesondere ein Wasserstoffatom,
X ist die direkte Bindung, $C_tH_{2t}$- mit t = 1-12, Arylen mit 6-10 C-Atomen, Xylylen, Cyclopentylen oder Cyclohexylen und $R_3$ hat die oben angegebene Bedeutung.

Als spezifische Beispiele für Maleinimide der Formel II, welche in den erfindungsgemässen Mischungen enthalten sein können, seien genannt:
N,N'-Aethylen-bis-maleinimid,
N,N'-Hexamethylen-bis-maleinimid,
N,N'-m-Phenylen-bis-maleinimid,
N,N'-p-Phenylen-bis-maleinimid,
N,N'-4,4'-Diphenylmethan-bis-maleinimid,
N,N'-4,4'-3,3'-Dichlor-diphenylmethan-bis-maleinimid,
N,N'-4,4'-Diphenyläther-bis-maleinimid,
N,N'-4,4'-Diphenylsulfon-bis-maleinimid,
N,N'-m-Xylylen-bis-maleinimid,
N,N'-p-Xylylen-bis-maleinimid,
N,N'-4,4'-2,2-Diphenylpropan-bis-maleinimid,
das N,N'-Bis-maleinimid des 4,4'-Diamino-triphenylphosphats,
das N,N'-Bis-maleinimid des 4,4'-Diamino-triphenylphosphits,
das N,N'-Bis-maleinimid des 4,4'-Diamino-triphenylthiophosphats,
das N,N',N"-Trismaleinimid des Tris-(4-aminophenyl)-phosphats,
das N,N',N"-Trismaleinimid des Tris-(4-aminophenyl)-phosphits und
das N,N',N"-Trismaleinimid des Tris-(4-aminophenyl)-thiophosphats.

Als Verbindungen der Formel II sind solche bevorzugt, worin m die Zahl 2, $R_3$ ein Wasserstoffatom und R' $-(CH_2)_p$ - mit p = 2-12, m- oder p-Phenylen, m- oder p-Xylylen, 1,4-Cyclohexylen, 1,4-Bis(methylen)-cyclohexylen, den Rest des 4,4'-Bicyclohexylmethans und vor allem einen in 4,4'-Stellung gebundenen Rest der Formel VII bedeuten, worin $Q_1$ und $Q_2$ je ein Wasserstoffatom und $T_1$ O, $CH_2$ oder $SO_2$ darstellen. Ganz besonders bevorzugt ist das N,N',4,4'-Diphenylmethan-bismaleinimid.

Als Komponente c) können an sich beliebige bekannte Verbindungen eingesetzt werden, die mit den Verbindungen der Formel II zu reagieren vermögen. Besonders geeignete Komponenten c) sind Diamine und Diole der Formel IX

$$HQ-R''-QH \qquad (IX),$$

worin Q O oder NH und R" einen zweiwertigen organischen Rest mit 2-30 C-Atomen bedeuten, sowie Phenol- und Kresol-Novolake oder Gemische solcher Verbindungen.

R" kann als zweiwertiger organischer Rest dieselbe Bedeutung wie R' haben, Bevorzugt stellt R" in Formel IX $-C_pH_{2p}$- mit p 2-20, besonders $-(CH_2)_p$ - mit p = 2-12, Arylen mit 6-10 C-Atomen, besonders m- oder p-Phenylen, Xylylen, Cyclopentylen, Cyclohexylen, 1,4-Bis-(methylen)cyclohexylen, den Rest des Bicyclohexylmethans oder einen Rest der Formel III dar. Besonders bevorzugt ist R" ein in 4,4'-Stellung gebundener Rest der Formel III.

Beispiele von Gruppen R' oder R" = $-C_pH_{2p}$ - oder von Arylengruppen R', R" und X sind unter R erwähnt.

Eine weitere Klasse bevorzugter Komponenten c) sind alkenylsubsti-tuierte Phenole und Polyole. Als Beispiele seien genannt:
Verbindungen der Formel X

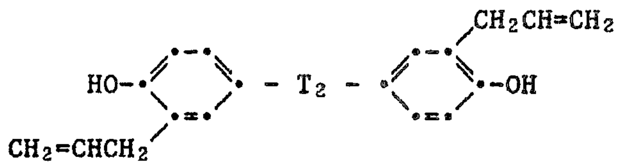

(X),

worin $T_2$ die direkte Bindung, Methylen, Isopropyliden, O, S, SO oder $SO_2$ bedeutet. Beispiele solcher Verbindungen sind:
o,o'-Diallyl-Bisphenol A, Bis(4-hydroxy-3-allyl)biphenyl, Bis(4-hydroxy-3-allylphenyl)methan und 2,2-Bis(4-hydroxy-3-allylphenyl)-propan.

Propenylsubstituierte Phenole der Formel XI

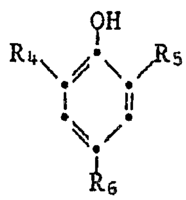

(XI),

worin $R_4$, $R_5$ und $R_6$ unabhängig voneinander ein Wasserstoffatom, eine Allyl- oder Propenylgruppe bedeuten, wobei mindestens eines von $R_4$ bis $R_6$ für die Propenylgruppe steht.

Verbindungen der Formel XII

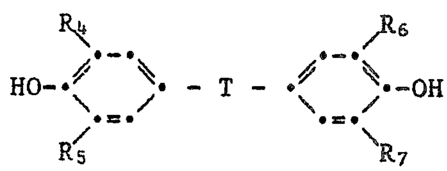

(XII),

worin $R_4$, $R_5$, $R_6$ und $R_7$ unabhängig voneinander ein Wasserstoffatom, eine Allyl- oder Propenylgruppe bedeuten, wobei mindestens eines von $R_4$ bis $R_7$ für die Propenylgruppe steht und T die oben unter Formel III angegebene Bedeutung hat.

Verbindungen der Formel XIII

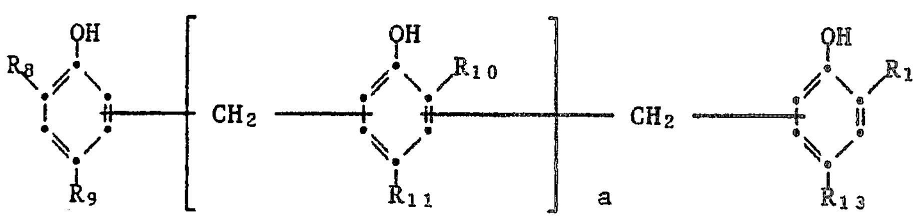

(XIII),

worin $R_8$, $R_9$, $R_{10}$, $R_{11}$, $R_{12}$ und $R_{13}$ unabhängig voneinander ein Wasserstoffatom, Alkyl mit 1-4 C-Atomen, Allyl oder Propenyl bedeuten, wobei mindestens eines von $R_8$ bis $R_{13}$ für die Propenylgruppe steht und a einen Wert von 0 bis 10 darstellt. Bevorzugt sind Verbindungen der Formel XII, worin $R_4$ und $R_6$ je eine Propenylgruppe und $R_5$ und $R_7$ je ein Wasserstoffatom bedeuten und T für Methylen, Isopropyliden oder O steht.

Es können auch Isomerengemische aus propenyl- und allyl-substituierten ein- oder mehrwertigen Phenolen eingesetzt werden. Von den Isomerengemischen werden bevorzugt Mischungen aus propenyl- und allylsubstituierten Phenolen der Formel XII eingesetzt, insbesondere solche, die durch partielle Isomerisierung von allylsubstituierten Phenolen der Formel XIIa

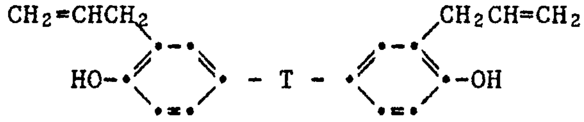 (XIIa),

worin T für Methylen Isopropyliden oder O steht, erhalten werden. Derartige alkenylsubstituierte Phenole und Polyole sind z.B. in den US-PS 4.100.140 und 4.371.719 beschrieben.

Als Komponenten c) können ferner verwendet werden:

Azomethine der Formel XIV oder XV

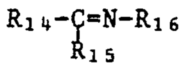 (XIV) oder 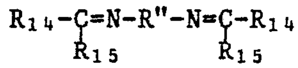 (XV),

worin $R_{14}$ ein Wasserstoffatom oder einen einwertigen Kohenwasserstoffrest darstellt und $R_{15}$ und $R_{16}$ die gleiche Bedeutung wie $R_{14}$ haben können, aber ungleich Wasserstoff sind oder $R_{14}$ und $R_{15}$ zusammen mit dem Bindungs-C-Atom ein cycloaliphatisches Ringsystem bilden und R" die unter Formel IX angegebene Bedeutung hat. Derartige Verbindungen sind z.B. in der GB-PS 1.443.067 beschrieben.

Bevorzugt sind Verbindungen der Formel XIV und besonders XV, worin $R_{14}$ Wasserstoff, $R_{15}$ und $R_{16}$ Phenyl und R" $-(CH_2)_r-$ mit r = 2-8, m- oder p-Phenylen oder einen Rest der Formel III darstellen. Als Beispiele solcher Azomethine seien genannt:
1,6-Benzyliden-hexamethylendiamin,
N,N'-Benzyliden-4,4'-diaminodiphenylmethan,
N,N'-Benzyliden-p-phenylendiamin und Benzalanilin.

Dihydrazide der Formel XVI

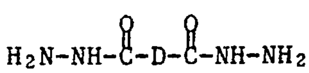 (XVI),

worin D die direkte Bindung oder einen zweiwertigen organischen Rest, vor allem den Rest einer aliphatischen, cycloaliphatischen oder aromatischen Dicarbonsäure bedeutet. Als Beispiele von Verbindungen der Formel XVI seien genannt: Oxalsäure-, Malonsäure-, Bernsteinsäure-, Glutarsäure-, Adipinsäure-, Pimelinsäure-, Korksäure-, Sebacinsäure-, Cyclohexandicarbonsäure-, Terephthalsäure-, Isophthalsäure-, 2,6- und 2,7-Naphthalindicarbonsäuredihydrazid und Gemische solcher Dihydrazide.

Hydrazide von Aminosäuren der Formel XVII

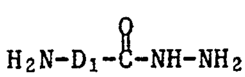 (XVII),

worin $D_1$ einen zweiwertigen organischen Rest bedeutet, wie die Hydrazide der folgenden Aminosäuren: Aminoessigsäure, Alanin, Leucin, Isoleucin, Phenylanalin, Valin, $\beta$-Alanin, $\gamma$-Aminobuttersäure, $\alpha$-Aminobuttersäure, Epsilon-Aminocapronsäure, Aminovaleriansäure, m-Aminobenzoesäure und Anthranilsäure, oder Hydrazide von Aminosäuren der Formel XVIII

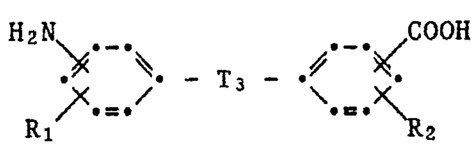 (XVIII),

worin $T_3$ die direkte Bindung, O, S, $SO_2$ oder $CH_2$ und $R_1$ und $R_2$ unabhängig voneinander ein Wasserstoffatom oder eine Methylgruppe bedeuten.

Schliesslich können als Komponenten c) auch Aminocrotonsäurederivate der in den US-PS 4.089.845 und 4.247.672 beschriebenen Art verwendet werden.

Bevorzugt enthalten die erfindungsgemässen Stoffgemische als Komponente c) Phenol- oder Kresol-Novolake, Verbindungen der Formel IXa

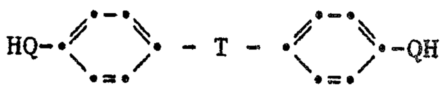

(IXa),

worin Q und T die oben unter der Formel IX bzw. III angegebene Bedeutung haben und T insbesondere Methylen oder Isopropyliden darstellt, oder Verbindungen der Formel X, worin $T_2$ Isopropyliden ist, sowie Gemische der genannten bevorzugten Verbindungen. Die Verbindungen der Formeln II bis V und IX bis XVII sind bekannt oder können nach an sich bekannten Methoden hergestellt werden.

Die Komponenten a) werden vorzugsweise in einer Menge von 20-50 Gew.% und die Komponenten b) in einer Menge von 50-80 Gew.% eingesetzt. Der Anteil an Komponenten c) beträgt mit Vorteil 0-25 Gew.% und insbesondere 10-25 Gew.%, bezogen auf die Summe von a) + b).

Die Herstellung der erfindungsgemässen Stoffgemische kann auf an sich bekannte Weise durch Vermahlen und Vermengen oder durch Aufschmelzen der Komponenten vorgenommen werden. Den erfindungsgemässen Gemischen können auch übliche Zusatzstoffe, wie Füllstoffe, Weichmacher, Pigmente, Farbstoffe, Formtrennmittel und flammhemmende Stoffe, zugesetzt werden.

Die Härtung bzw. Verarbeitung der Stoffgemische kann in einem inerten organischen Lösungsmittel, vorzugsweise jedoch aus der Schmelze und gegebenenfalls in Gegenwart eines Härtungskatalysators erfolgen. Als inerte organische Lösungsmittel eignen sich z.B. N,N-Dimethylformamid, N,N-Dimethylacetamid, N-Methylpyrrolidon, Toluol, Xylole, Methyläthylketon, und Aethylenglykolmonoalkyl- oder -dialkyläther mit 1-4 C-Atomen in den Alkylgruppen. Je nach Art der eingesetzten Komponente c) und der beabsichtigten Verwendung kommen als Härtungskatalysatoren z.B. organische Peroxide, wie Di-tertbutylperoxid, Dicumylperoxid oder tert-Butylperbenzoat, oder basische Katalysatoren, vor allem primäre, sekundäre und tertiäre Amine in Betracht, wie z.B. Diäthylamin, Tributylamin, Triäthylamin, Benzylamin, N,N,N',N'-Tetramethyl-4,4'-diaminodiphenylmethan, N,N-Diisobutylaminoacetonitril, N,N-Dibutylaminoacetonitril und heterocyclische Basen, wie Chinolin, N-Methylpyrrolidin und Imidazol. Besonders bei der Verwendung von Phenolen oder Polyolen als Komponente c) empfiehlt sich der Zusatz von basischen Katalysatoren der erwähnten Art. Die Härtung wird im allgemeinen bei Temperaturen zwischen 150 und 350 °C, besonders 180 und 300 °C vorgenommen.

Die erfindungsgemässen Stoffgemische stellen niederschmelzende Festharze bis viskose Flüssigharze dar und zeichnen sich durch hohe Reaktivität und gute mechanische Eigenschaften der damit gehärteten Produkte aus, wie gute Biege- und Zugscherfestigkeit oder interlaminare Scherfestigkeit. So erhaltene Produkte weisen hohe Glasumwandlungstemperaturen auf und sind wenig spröde. Die erfindungsgemässen Stoffgemische können ferner leicht aus der Schmelze, besonders auch ohne Zusatz von schwerflüchtigen Lösungsmitteln, appliziert werden, beispielsweise zum Imprägnieren von Glasfaser-, Kohlenstoffaser- oder Aramidfaser-Geweben, wie Fasergewebe aus den unter dem Handelsnamen Kevlar ® bekannten Poly(1,4-phenylenterephthalamiden).

Die erfindungsgemässen Stoffgemische können vielseitig angewendet werden, z.B. als Laminier- oder Elektroharze, als Hochtemperatur-Klebstoffe oder zur Herstellung von Beschichtungen oder Formkörpern, wie Prepregs und Verbundwerkstoffen. Gegenstand der Erfindung sind somit auch die Verwendung der erfindungsgemässen Gemische zur Herstellung von Formkörpern, Beschichtungen oder Verklebungen mittels Härtung und die so erhaltenen Produkte.

Die Erfindung wird durch die folgenden Beispiele näher erläutert.

Beispiel 1: Man schmilzt 51,53 g Bis-[4-(allyl-bicyclo[2.2.1]hept-5-en-2,3-dicarbonsäureimidophenyl)]-methan [N,N',4,4'-Diphenylmethan-bis(allylnadic)imid, hergestellt gemäss Beispiel 11 der EP-A-105.024, Fp. 80 °c] auf und löst in dieser Schmelze 48,47 g N,N',4,4'-Diphenylmethan-bismaleinimid. Die Imidmischung hat eine Glasumwandlungstemperatur von 72 °C. Bei der Differentialthermoanalyse (System TA 2000 der Fa. Mettler AG, Greifensee, CH) zeigt das Gemisch einen Reaktionsbeginn $T_A$ bei 130 °C, ein Reaktionsmaximum $T_{max}$ bei 230 °C und ein Abklingen der Reaktion $T_E$ bei 320 °c. Die integrale Reaktionswärme $\Delta$ H der Härtung beträgt 244 kJ/kg. Das Gemisch wird zu Platten (120 x 120 x 4 mm) verarbeitet und während

12 Stunden bei 250 °C nachgehärtet. Man erhält einen Festkörper mit den folgenden Eigenschaften:

| | |
|---|---|
| Biegefestigkeit nach DIN 53452 | 92,0 $N/mm^2$ |
| Randfaserdehnung nach ISO 178 | 2,9 % |
| Schlagbiegefestigkeit nach DIN 53453 | 7,3 $kJ/m^2$ |
| Wasseraufnahme nach 4 Tagen bei Raumtemperatur (20-25°C) | 2,34 % |
| Wasseraufnahme nach 1 Stunde bei 100°C | 0,89 % |
| Glasumwandlungstemperatur (bestimmt mit Differentialthermoanalyse-Gerät TA 2000 der Firma Mettler) | 312°C |

Beispiel 2: 24,68 g Bis-[4-(allyl-bicyclo[2.2.1]hept-5-en-2,3-dicarbonsäureimidophenyl)]methan] werden aufgeschmolzen. Dann setzt man 63,62 g N,N',4,4'-Diphenylmethan-bismaleinimid und 13,70 g 4,4'-Diaminodiphenylmethan zu. Das Gemisch weist eine Glasumwandlungstemperatur von 85 °C auf. Mittels Differentialthermoanalyse werden die folgenden Werte ermittelt: $T_A$ = 110 °C, $T_{max}$ = 215 °C, $T_E$ = 290 °C, integrale Reaktionswärme = 163 kJ/kg. Das Gemisch wird zu Platten (120 x 120 x 4 mm) verarbeitet und während 12 Stunden bei 250 °C nachgehärtet. Es werden die folgenden Eigenschaften der gehärteten Platten (nach denselben Prüfnormen wie in Beispiel 1 angegeben) ermittelt:

| | |
|---|---|
| Biegefestigkeit | 132,7 $N/mm^2$ |
| Randfaserdehnung | 4,54 % |
| Schlagbiegefestigkeit | 19,56 $kJ/m^2$ |
| Wasseraufnahme nach 4 Tagen bei Raumtemperatur | 1,63 % |
| Wasseraufnahme nach 1 Stunde bei 100°C | 0,76 % |
| Glasumwandlungstemperatur | 351,5°C |

Beispiele 3-8: Nach dem in den Beispielen 1 und 2 beschriebenen Verfahren werden weitere Gemische aus Komponenten a), b) und gegebenenfalls c) hergestellt und zu Formkörpern (Platten 120 x 120 x 4 mm) verarbeitet. Die Eigenschaften der Gemische und der gehärteten Produkte werden wie in Beispiel 1 angegeben bestimmt. Die Resultate sind in der folgenden Tabelle I zusammengefasst.

Tabelle I

| Beispiel Nr. | 3 | 4 | 5 | 6 |
|---|---|---|---|---|
| Komponenten a), b), c) (g) | | | | |
| a) Allyl-bicyclo[2.2.1]hept-5-en-2,3-dicarbonsäure-N-allylimid 4) | 27,1 | 12,2 | - | - |
| Bis[4-(allyl-bicyclo[2.2.1]hept-5-en-2,3-dicarbonsäureimido-phenyl)]methan | - | - | 45,28 | 23,65 |
| b) N,N',4,4'-Diphenylmethan-bismaleinimid | 59,6 | 71,9 | 42,59 | 59,37 |
| c) 4,4'-Diaminodiphenylmethan | 13,3 | 15,9 | - | - |
| 2,2-Bis(4-hydroxy-3-allyl-phenyl)propan | - | - | 12,17 | 16,98 |
| dynamische Viskosität $eta_{80}$ (Pa.s) | 1,97 | - | - | - |
| $T_G$ (°C) 1) | - | 70 | - | - |
| $T_A$ (°C) | 140 | 140 | 140/290 3) | 140 |
| $T_{max}$ (°C) | 235 | 240 | 235/310 | 235 |
| $T_E$ (°C) | 330 | 330 | 290/355 | 330 |
| ΔH (kJ/kg) | 260 | 330 | -/199 | 260 |
| Eigenschaften der gehärteten Produkte nach 12 Std. Härtung bei 250°C: | | | | |
| Biegefestigkeit ($N/mm^2$) | 113,2 | 149,2 | 140,2 | 156,4 |
| Randfaserdehnung (%) | 3,30 | 5,0 | 4,91 | 5,72 |
| Schlagbiegefestigkeit ($kJ/m^2$) | 7,95 | 13,7 | 13,64 | 16,96 |
| Wasseraufnahme nach 4 h/Raumtemperatur (%) | 1,40 | 1,32 | 1,41 | 1,49 |
| Wasseraufnahme 1 h/100°C (%) | 0,55 | 0,51 | 0,64 | 0,70 |
| $T_G$ (°C) 2) | 343 | 330 | 341 | 347,5 |

1) Glasumwandlungstemperatur des Ausgangsgemisches
2) Glasumwandlungstemperatur des gehärteten Produkts
3) erster und zweiter Peak
4) hergestellt gemäss Beispiel 3 der EP-A-105024

Tabelle I (Fortsetzung)

| Beispiel Nr. | 7 | 8 |
|---|---|---|
| Komponenten a), b), c) (g) | | |
| a) Allyl-bicyclo[2.2.1]hept-5-en-2,3-dicarbonsäure-N-allylimid | 48,6 | 48,6 |
| b) N,N',4,4'-Diphenylmethan-bismaleinimid | 71,6 | 71,6 |
| c) 2,2-Bis(4-hydroxyphenyl)propan (Bisphenol A) | 28,8 | - |
| Bis(4-hydroxyphenyl)methan (Bisphenol F) | - | 20,0 |
| Katalysator: N,N,N',N'-Tetramethyl-4,4'-diaminodiphenylmethan (g) | 0,149 | 1,40 |
| $eta_{80}$ (Pa.s) | 2,12 | 0,77 |
| $T_A$ (°C) | 130 | 155/285[3)] |
| $T_{max}$ (°C) | 242 | 235/320 |
| $T_E$ (°C) | 300 | 285/360 |
| ΔH (kJ/kg) | 276 | 282/15 |
| Eigenschaften der gehärteten Produkte nach Härtung bei 1 h/220°C, 6 h/250°C: | | |
| Biegefestigkeit (N/mm$^2$) | 121,8 | 113,8 |
| Randfaserdehnung (%) | 3,31 | 2,74 |
| Schlagbiegefestigkeit (kJ/m$^2$) | 10,0 | 7,85 |
| Zugscherfestigkeit auf Anticorodal nach DIN 53283 (N/mm$^2$) | 51,98 | 35,30 |
| Wasseraufnahme nach 4 h/Raumtemperaur (%) | 0,39 | 0,88 |
| Wasseraufnahme 1 h/100°C (%) | 0,59 | 0,80 |
| $T_G$ (°C)[2)] | 346 | 343 |

Beispiele 9-12: Nach dem in Beispiel 2 beschriebenen Verfahren werden weitere Gemische aus den in Tabelle II angegebenen Komponenten a), b) und c) hergestellt und deren Glasumwandlungstemperaturen bestimmt. Die Resultate sind in Tabelle II zusammengefasst. Anschliessend wird N,N-Dimethylformamid vorgelegt, auf 60 °C erwärmt und unter Rühren portionenweise mit solchen Mengen der erhaltenen Gemische versetzt, dass die daraus hergestellten Prepregs einen Harzgehalt von 41-42 Gewichtsprozent aufweisen, wobei die erforderlichen Mengen durch Vorversuche bestimmt werden. Es wird während ca. 1 Stunde bei 60-70 °C weitergerührt. Nach dieser Zeit liegen in allen Fällen klare, gelbbraune Lösungen vor.

Herstellung der Prepregs: Gewebebahnen aus Kohlenstoff-Fasern vom Typ G 814 NT der Fa. Brochier S.A. mit den Abmessungen 245 x 16 cm werden durch die oben beschriebenen Imprägnierlösungen gezogen und während 10 Minuten zum Abtropfen aufgehängt. Anschliessend werden sie auf ein Trockengestell aufgezogen und während 8 Minuten bei 160 °C in einem Umluftofen getrocknet. Die getrockneten C-Fasergewebebahnen werden in 13,5 x 14,5 cm grosse Stücke zerschnitten. Der Harzgehalt der Prepregs beträgt gemäss gravimetrischer Messung in allen Fällen 41-42 Gew.%.

Laminat-Herstellung: Jeweils 11 Lagen Prepreg (13,5 x 14,5 cm) werden auf beiden Seiten mit einer Kupferfolie abgedeckt und in eine Poly(diphenyloxid-pyromellitimid)-Folie (Kapton® der Fa. DuPont) eingewickelt. Die Prepregs werden dann in eine auf 180 °C vorgeheizte Presse gegeben. Nach einer Kontaktzeit von 2 Minuten wird im Verlauf von 2 Minuten ein Druck von 907 kg aufgepresst, wodurch ein ausreichender

Fluss der Harzmischunng gewährleistet bleibt. Nach 7 Minuten wird der Druck innerhalb von 3 Minuten auf 3628 kg erhöht, und dieser Druck wird während 1 Std. bei 180 °C aufrechterhalten. Die so erhaltenen Laminate werden abgekühlt und bei 100-120 °C aus der Presse entfernt. Man erhält Laminate mit sehr guter Oberfläche ohne sichtbare Leerstellen. Die Laminate werden anschliessend wie folgt in einem Umluftofen nachgehärtet:
3 h bei 200 °C, 3 h bei 225 °C und 12 h bei 250 °C. Es wird die interlaminare Scherfestigkeit der Laminate nach ASTM D 2344 bei 23 °C bestimmt. Die Resultate sind in der folgenden Tabelle II angegeben.

Tabelle II

| Beispiel Nr. | 9 | 10 | 11 | 12 |
|---|---|---|---|---|
| Komponenten a), b), c) (g) | | | | |
| a) Bis[4-(allyl-bicyclo[2.2.1]hept-5-en-2,3-dicarbonsäureimido-phenyl)]methan | 136,0 | 136,92 | - | - |
| N,N'-Hexamethylen-bis-(allyl-bicyclo[2.2.1]hept-5-en-2,3-dicarbonsäureimid) 1) | - | - | - | 305,36 |
| Allyl-bicyclo[2.2.1]hept-5-en-2,3-dicarbonsäure-N-allylimid | - | - | 68,04 | - |
| b) N,N',4,4'-Diphenylmethan-bismaleinimid | 341,6 | 343,68 | 400,96 | 223,72 |
| c) 4,4'-Diaminodiphenylmethan | 76,0 | - | 88,76 | 49,48 |
| 2,2-Bis(4-hydroxy-3-allylphenyl)-propan | - | 98,28 | - | - |
| Glasumwandlungstemperatur des Ausgangsgemisches °C | 90 | 43 | 54 | 74 |
| interlaminare Scherfestigkeit der Laminate $N/mm^2$ - Mittelwert 2) | 40,1 | 34,8 | 50,4 | 57,6 |

1) hergestellt gemäss Beispiel 9 der EP-A- 105024

2) Mittelwert von je 6 Messungen

## Ansprüche

1. Heisshärtbare Stoffgemische, enthaltend
   a) 10-90 Gew.% mindestens einer Verbindung der Formel I

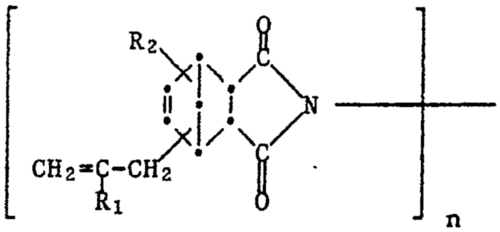 (I) ,

b) 90-10 Gew.% mindestens einer Verbindung der Formel II

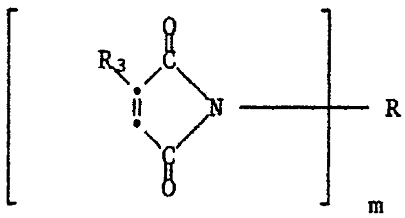 (II)

und, bezogen auf die Summe von a) + b),
c) 0-30 Gew.% mindestens einer zur Reaktion mit der Komponente b) befähigten Verbindung, wobei n 1 oder 2 und m 2 oder 3 bedeuten,
R, falls n 1 bedeutet, ein Wasserstoffatom, Alkyl mit 1-12 C-Atomen, Alkenyl mit 3-6 C-Atomen, Cycloalkyl mit 5-8 C-Atomen, Aryl mit 6-10 C-Atomen oder Benzyl, oder, falls n 2 bedeutet, $-C_pH_{2p}-$ mit p = 2-20, Arylen mit 6-10 C-Atomen oder eine Gruppe der Formel III

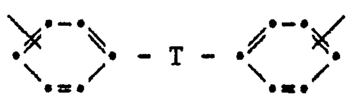 (III)

mit T = Methylen, Isopropyliden, CO, O, S oder $SO_2$,
R' einen m-wertigen organischen Rest mit 2-30 C-Atomen und $R_1$, $R_2$ und $R_3$ unabhängig voneinander ein Wasserstoffatom oder eine Methylgruppe bedeuten.

2. Stoffgemische nach Anspruch 1, worin $R_1$ und $R_2$ je ein Wasserstoffatom bedeuten.

3. Stoffgemische nach Anspruch 1, worin $R_1$ und $R_2$ je ein Wasserstoffatom bedeuten und R, falls n = 1 ist, für Wasserstoff, Alkyl mit 1-8 C-Atomen, Allyl, Cyclohexyl, Phenyl oder Benzyl steht, oder, falls n = 2 ist, für $(CH_2)_p$- mit p = 2-12, m- oder p-Phenylen oder für eine Gruppe der Formel III steht, worin T die Methylengruppe, O oder $SO_2$ bedeutet.

4. Stoffgemische nach Anspruch 1, worin $R_1$ und $R_2$ ein Wasserstoff-atom und R, falls n = 1 ist, Allyl, oder falls n = 2 ist, $-(CH_2)_6$-oder

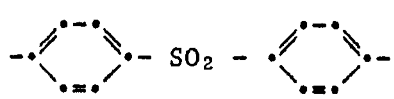

und insbesondere

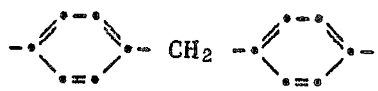

bedeuten.

**5.** Stoffgemische nach Anspruch 1, die als Komponente(n) a) Allylbicyclo[2.2.1]hept-5-en-2,3-dicarbonsäure-N-allylimid, Bis[4-(allylbicyclo[2.2.1]hept-5-en-2,3-dicarbonsäureimidophenyl)]-methan oder N,N'-Hexamethylen-bis-(allyl-bicyclo[2.2.1]hept-5-en-2,3-dicarbonsäureimid) oder ein Gemisch dieser Verbindungen enthalten.

**6.** Stoffgemische nach Anspruch 1, worin m die Zahl 2, $R_3$ ein Wasserstoffatom und R' $(CH_2)_p$- mit p = 2-12, m- oder p-Phenylen, m- oder p-Xylylen, 1,4-Cyclohexylen, 1,4-Bis(methylen)-cyclohexylen, den Rest des 4,4'-Bicyclohexylmethans und vor allem einen Rest der Formel VIIa

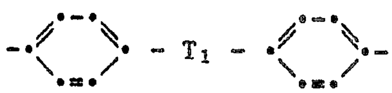

(VIIa)

bedeuten, worin $T_1$ O, $CH_2$ oder $SO_2$ darstellt.

**7.** Stoffgemische nach Anspruch 1, die als Verbindung b) N,N',4,4'-Diphenylmethan-bismaleinimid enthalten.

**8.** Stoffgemische nach Anspruch 1, die als Komponente c) ein Diamin oder Diol der Formel IX

$$HQ-R''-QH \qquad (IX),$$

worin Q O oder NH und R" einen zweiwertigen organischen Rest mit 2-30 C-Atomen bedeuten, oder einen Phenol- oder Kresol-Novolak oder Gemische solcher Verbindungen enthalten.

**9.** Stoffgemische nach Anspruch 1, die als Komponente c) eine Verbindung der Formel X

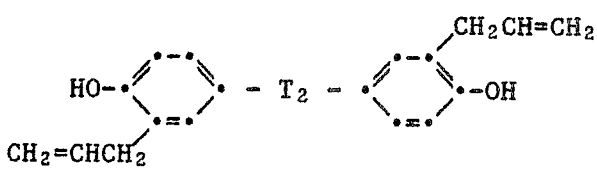

(X)

enthalten, worin $T_2$ die direkte Bindung, Methylen, Isopropyliden, O, S, SO oder $SO_2$ bedeutet.

**10.** Stoffgemische nach Ansprüchen 8 und 9, die als Komponente(n) c) einen Phenol- oder Kresol-Novolak, eine Verbindung der Formel IXa

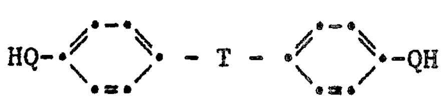

(IXa)

oder eine Verbindung der Formel X oder ein Gemisch der genannten Verbindungen enthalten, worin Q O oder NH, T Methylen oder Isopropyliden und $T_2$ Isopropyliden bedeuten.

**11.** Stoffgemische nach Ansprüchen 1-10, worin die Komponente(n) a) in einer Menge von 20-50 Gew.% und die Komponente(n) b) in einer Menge von 50-80 Gew.% vorliegen und der Anteil an Komponente(n) c) 0-25 Gew.%, bezogen auf die Summe von a) + b), beträgt.

**12.** Verwendung der härtbaren Stoffgemische nach Anspruch 1 zur Herstellung von Formkörpern, Beschichtungen oder Verklebungen mittels Härtung.

## Claims

**1.** A heat-curable mixture containing
a) 10-90% by weight of at least one compound of the formula I

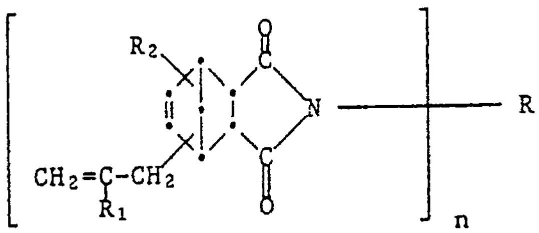

(I)

b) 90-10% by weight of at least one compound of the formula II

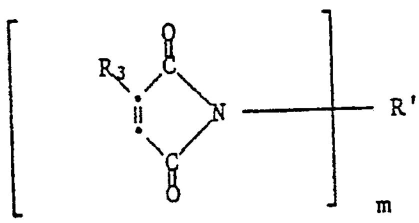

(II)

and, based on the sum of a) + b),
c) 0-30% by weight of at least one compound which is capable of reaction with component b), where n is 1 or 2 and m is 2 or 3,
if n is 1, R is a hydrogen atom, alkyl of 1-12 C atoms, alkenyl of 3-6 C atoms, cycloalkyl of 5-8 C atoms, aryl of 6-10 C atoms or benzyl, or if n is 2, R is $-C_pH_{2p}-$ where p = 2-20, arylene of 6-10 C atoms or a group of the formula III

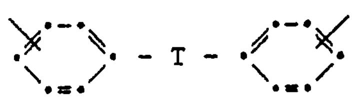

(III)

where T = methylene, isopropylidene, CO, O, S or $SO_2$, R' is an m-valent organic radical of 2-30 C atoms and $R_1$, $R_2$ and $R_3$ are each independently of one another a hydrogen atom or a methyl group.

**2.** A mixture according to claim 1, in which $R_1$ and $R_2$ are each a hydrogen atom.

**3.** A mixture according to claim 1, in which $R_1$ and $R_2$ are each a hydrogen atom and, if n is 1, R is

hydrogen, alkyl of 1-8 C atoms, allyl, cyclohexyl, phenyl or benzyl, or if n is 2, R is $-(CH_2)_p-$ where p = 2-12, m- or p-phenylene or is a group of the formula III, in which T is the methylene group, O or $SO_2$.

4. A mixture according to claim 1, in which $R_1$ and $R_2$ are a hydrogen atom and, if n is 1, R is allyl, or if n is 2, R is $-(CH_2)_6-$ or

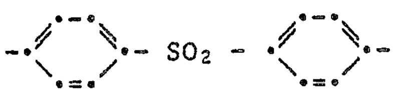

and especially

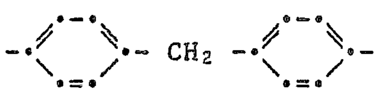

5. A mixture according to claim 1, which contains as component(s) a) N-allyl-allylbicyclo[2.2.1]hept-5-ene-2,3-dicarboximide, bis[4-(allylbicyclo[2.2.1]hept-5-ene-2,3-dicarboximidophenyl)]-methane or N,N'-hexamethylene-bis-(allyl-bicyclo[2.2.1]hept-5-ene-2,3-dicarboximide) or a mixture of these compounds.

6. A mixture according to claim 1, in which m is the number 2, $R_3$ is a hydrogen atom and R' is $-(CH_2)_p-$ where p = 2-12, m- or p-phenylene, m- or p-xylylene, 1,4-cyclohexylene, 1,4-bis(methylene)-cyclohexylene, the radical of 4,4'-bicyclohexylmethane and in particular a radical of the formula VIIa

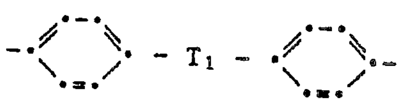

(VIIa)

in which $T_1$ is O, $CH_2$ or $SO_2$.

7. A mixture according to claim 1, which contains as compound b) N,N',4,4'-diphenylmethane-bismaleimide.

8. A mixture according to claim 1, which contains as component c) a diamine or diol of the formula IX

$$HQ-R''-QH \qquad (IX)$$

in which Q is O or NH and R" is a divalent organic radical of 2-30 C atoms, or a phenol or cresol novolak or a mixture of such compounds.

9. A mixture according to claim 1, which contains as component c) a compound of the formula X

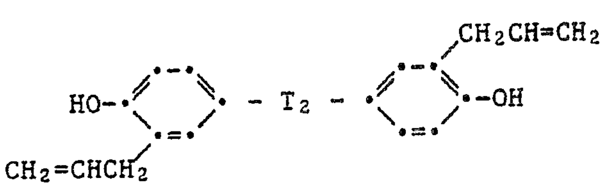

(X)

in which $T_2$ is a direct bond, methylene, isopropylidene, O, S, SO or $SO_2$.

**10.** A mixture according to claims 8 and 9, which contains as component(s) c) a phenol or cresol novolak, a compound of the formula IXa

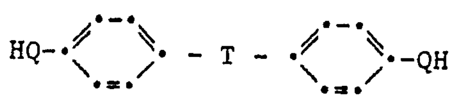

(IXa)

or a compound of the formula X or a mixture of the said compounds, in which Q is 0 or NH, T is methylene or isopropylidene and $T_2$ is isopropylidene.

**11.** A mixture according to any one of claims 1 to 10, in which the component(s) a) are present in an amount of from 20-50% by weight and the component(s) b) are present in an amount of from 50-80% by weight and the proportion of component(s) c) is 0-25% by weight, based on the sum of a) + b).

**12.** Use of the curable mixture according to claim 1 for the production of mouldings, coatings or adhesive bonds by means of curing.

**Revendications**

**1.** Mélanges de matières thermodurcissables qui contiennent :

a) de 10 à 90% en poids d'un ou plusieurs composés de formule I :

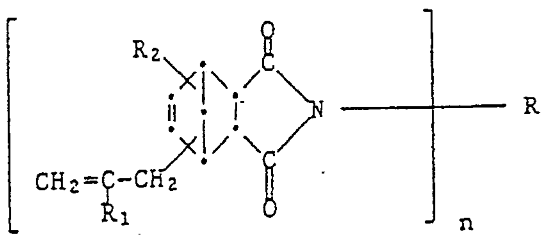

(I) ,

b) de 90 à 10% en poids d'un ou de plusieurs composés de formule II

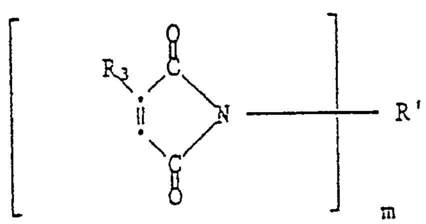

(II)

et, par rapport à la somme a) + b),

c) de 0 à 30% en poids d'un ou de plusieurs composés pouvant réagir avec le composant b),

n étant le nombre 1 ou 2 et m le nombre 2 ou 3,

R, si n=1, désignant un atome d'hydrogène, un alkyle en $C_{1-12}$, un alcényle en $C_{3-6}$, un cycloalkyle en $C_{5-8}$, un aryle en $C_{6-10}$ ou un benzyle, ou bien, si n = 2, un groupe $-C_pH_{2p}-$, p étant un nombre de 2 à 20, un arylène en $C_{6-10}$ ou encore un groupe de formule III

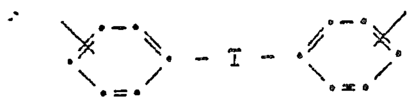 (III)

T étant le groupe méthylène, isopropylidène, CO ou $SO_2$ou bien O ou S,
R' désignant un radical organique de valence m en $C_{2-30}$ et $R_1$, $R_2$ et $R_3$, indépendamment les uns des autres, chacun un atome d'hydrogène ou le groupe méthyle.

2. Mélanges selon la revendication 1, $R_1$ et $R_2$ étant chacun un atome d'hydrogène.

3. Mélanges selon la revendication 1, dans lesquels $R_1$ et $R_2$ sont chacun un atome d'hydrogène et R, si n = 1, est l'hydrogène, un alkyle en $C_{1-8}$, un allyle, un cyclohexyle, un phényle ou un benzyle, ou bien, si n = 2, un groupe $-(CH_2)_p$, p étant un nombre de 2 à 12, un groupe m- ou p-phénylène ou un groupe de formule III dans lequel T est le groupe méthylène, O ou $SO_2$.

4. Mélanges selon la revendication 1, dans lesquels $R_1$ et $R_2$ sont des atomes d'hydrogène et R, si n = 1, est un groupe allyle, ou si n = 2 un groupe $-(CH_2)_6$-ou

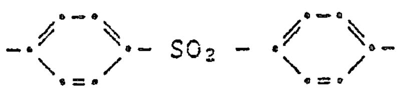

et en particulier le groupe

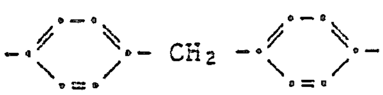

5. Mélanges selon la revendication 1 qui contiennent comme composant ou composants a) l'allylbicyclo-[2.2.1]hept-5-ène-2,3-dicarboxy-N-allylimide, le bis [4-(allyl-bicyclo[2.2.1]hept-5-ène-2,3-dicarboximidophényl)]-méthane ou le N,N'-hexaméthylène-bis-(allylbicyclo[2.2.1]hept-5-ène-2,3-dicarboximide) ou un mélange de plusieurs de ces composés.

6. Mélanges selon la revendication 1, m étant le nombre 2, $R_3$ un atome d'hydrogène et R' un groupe $-(CH_2)_p$-avec p = 2-12, un groupe m- ou p-phénylène, m- ou p-xylylène, 1,4-cyclohexylène, 1,4-bis-(méthylène)-cyclohexylène, ou encore le radical du 4,4'-bicyclohexylméthane, et principalement un radical de formule VIIa

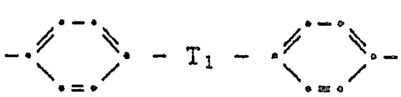 (VIIa)

$T_1$ représentant O, $CH_2$ ou $SO_2$.

7. Mélanges selon la revendication 1 qui contiennent comme composé b) le N,N',4,4'-diphénylméthanebismaléimide.

8. Mélanges selon la revendication 1 qui contiennent comme composant c) une diamine ou un diol de formule IX

$$HQ\text{-}R''\text{-}QH \qquad (IX)$$

dans laquelle Q représente l'oxygène ou le groupe NH et R" un radical organique divalent en $C_{2-30}$, ou bien une novolaque de phénol ou de crésol ou encore un mélange de plusieurs de ces composés.

**9.** Mélanges selon la revendication 1 qui contiennent comme composant c) un composé de formule X

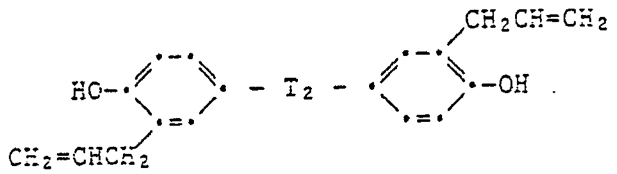

(X)

$T_2$ représentant la liaison directe ou bien le groupe éthylène ou isopropylidène, O, S, SO ou $SO_2$.

**10.** Mélanges selon les revendications 8 et 9 qui contiennent comme composant ou composants c) une novolaque de phénol ou de crésol, un composé de formule IXa

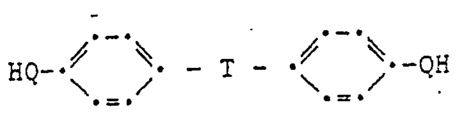

(IXa)

ou un composé de formule X ou bien un mélange de plusieurs des composés indiqués, Q représentant O ou NH, T le groupe méthylène ou isopropylidène et $T_2$ le groupe isopropylidène.

**11.** Mélanges selon les revendications 1 à 10 dans lesquels le ou les composants a) sont dans une proportion de 20 à 50% en poids et le ou les composants b) dans une proportion de 50 à 80% en poids et la proportion du ou des composants c) est de 0 à 25% du poids de la somme a) + b).

**12.** L'emploi des mélanges durcissables selon la revendication 1 pour la formation d'objets moulés, revêtements ou collages par durcissement.